# EUROPEAN PATENT APPLICATION

(11) **EP 3 693 788 A1**
(43) Date of publication of application: **12.08.2020**
(21) Application number: 18863843.1
(22) Date of filing: 04.09.2018
(51) Int. Cl.: G02F 1/1333, C09J 7/00, G02F 1/13357, G09F 9/00

(54) **DISPLAY DEVICE AND METHOD FOR MANUFACTURING DISPLAY DEVICE**

(30) Priority: 06.10.2017 JP 2017196034; 06.10.2017 JP 2017196033
(71) Applicant: AGC Inc., Chiyoda-ku Tokyo 100-8405 (JP)
(72) Inventor: NOJIRI Yu, Tokyo 100-8405 (JP); KASUYA Kenta, Tokyo 100-8405 (JP); KOBAYASHI Katsuhiro, Tokyo 100-8405 (JP)
(74) Representative: Müller-Boré & Partner Patentanwälte PartG mbB
(86) International application number: PCT/JP2018/032771
(87) International publication number: WO 2019/069611

(57) **Abstract**

A display device comprising a transparent substrate and a liquid crystal display device having a liquid crystal panel and a back light, disposed on the transparent substrate, which comprises:
a transparent resin to bond the liquid crystal panel to the transparent substrate,
a strip double-sided adhesive provided so as to surround the bonded liquid crystal panel and bonded on the transparent substrate,
a flexible member bonded to an opposite side of the double-sided adhesive from the transparent substrate-bonded surface, and
an attaching member to attach the back light, formed on an opposite side of the flexible member from the bonded surface.

## Description

### TECHNICAL FIELD

The present invention relates to a display device and a process for producing the display device.

### BACKGROUND ART

Heretofore, digital signage has been known such that a flat panel display such as a liquid crystal display device is attached to a window glass or the like and a color image of e.g. a still image or a video image is displayed on the flat panel display.

As a display device for digital signage of such a type, for example, Patent Document 1 discloses a technique such that a liquid crystal display device is attached to one surface of a glass plate such as a window glass. The liquid crystal display device as disclosed in Patent Document 1 comprises a liquid crystal panel and a back light.

A liquid crystal panel comprises a pair of transparent substrates and a liquid crystal filled between the pair of transparent substrates, and the liquid crystal panel is bonded to e.g. a transparent window glass by e.g. a transparent adhesive.

A back light comprises a light source such as a cold cathode tube or a LED, and a light guide which guides light from the light source to the whole liquid crystal panel surface. The back light is heavy as compared with the liquid crystal panel and accordingly in Patent Document 1, a double-sided adhesive tape is bonded on a transparent plate such as a window glass so as to surround the liquid crystal panel, and an attaching member such as an L angle is bonded to an adhesive surface of the double-sided adhesive tape on the opposite side from the transparent plate-bonded surface, and the back light is fixed to the attaching member mechanically e.g. by a screw.

Further, a technique has been known (for example, Patent Document 2) in which a transparent substrate to which a display device is bonded is used as a top plate of a table.

Patent Document 2 discloses a constitution such that a touch panel is bonded to the lower surface of a transparent substrates horizontally disposed via a transparent resin, a second transparent substrates is bonded to the lower surface of the touch panel via a transparent resin, and further a display device such as a liquid crystal display panel is bonded to the lower surface of the second transparent substrates via a transparent resin.

### PRIOR ART DOCUMENTS

### PATENT DOCUMENTS

Patent Document 1: JP-A-2016-97650
Patent Document 2: JP-A-2017-21444

### DISCLOSURE OF INVENTION

### TECHNICAL PROBLEM

However, by the technique as disclosed in Patent Document 1, the attaching member such as an L angle is formed by extrusion or bending, and flatness of the bonding surface of the attaching member to the double-sided adhesive tape is hardly achieved. Accordingly, even when the attaching member is to be bonded to a transparent substrate such as a window glass by the double-sided adhesive tape, the attaching member can hardly be tightly attached to the transparent substrate by the whole surface of the double-sided adhesive tape, and the back light constituting the liquid crystal display device cannot securely be fixed.

Particularly in application in winter time, an adhesive of the double-sided adhesive tape tends to be hard, and the area of the bonding surface cannot sufficiently be secured.

Further, by the technique as disclosed in Patent Document 2, the total load from the touch panel to the display device must be supported by the transparent resin which bonds the touch panel to the transparent substrate, and thus peeling may occur between the transparent substrate and the touch panel.

Under these circumstances, the object of the present invention is to provide a liquid crystal display device such that the area of the bonding surface can be sufficiently secured and the back light can be securely fixed on the transparent substrate, and a process for producing such a display device.

Another object of the present invention is to provide a display device which reduces possibility of peeling between the transparent substrate and the touch panel, and a process for producing such a display device.

### SOLUTION TO PROBLEM

The present invention is to achieve the above objects and has the following embodiments. The display device of the present invention is a display device comprising a transparent substrate and a liquid crystal display device having a liquid crystal panel and a back light, bonded on the transparent substrate, which comprises:
a transparent resin to bond the liquid crystal panel to the transparent substrate,
a strip double-sided adhesive provided so as to surround the bonded liquid crystal panel and bonded on the transparent substrate,
a flexible member bonded to an opposite side of the double-sided adhesive from the transparent substrate-bonded surface, and
an attaching member to attach the back light, provided on an opposite side of the flexible member from the bonded surface.

In the display device of the present invention, the flexible member preferably has such flexibility that the whole surface of the double-sided adhesive is tightly attached to the transparent substrate by the pushing force of a worker.

According to the present invention, by the flexible member, the transparent substrate and the continuous substrate can be tightly attached by the whole surface of the double-sided adhesive by pushing the continuous substrate by a worker. And, by providing an attaching member to the sufficiently attached continuous substrate, the back light can be securely fixed on the transparent substrate.

In the display device of the present invention, the flexible member is constituted preferably by a planar body made of a metal or a synthetic resin. According to such an embodiment of the present invention, the transparent substrate which is usually planar and the planar flexible member can be bonded by the double-sided adhesive, and accordingly a worker can tightly attach substantially the whole surface of the flexible member to the transparent substrate with a smaller force.

In the display device of the present invention, the flexible member and the attaching member are preferably mechanically fixed.

As a mechanical fixing method, for example, a method may be employed in which a female screw hole is formed on the planar flexible member, and a bolt is screwed into the attaching member such as an L angle. Otherwise, a method may also be employed in which a hole is formed on the planar flexible member, and the attaching member is fixed by a fastener such as a rivet. According to such an embodiment of the present invention, the flexible member and the attaching member are mechanically fixed, whereby the flexible member and the attaching member can be strongly fixed, and accordingly the back light can be fixed by the attaching member with a smaller number of fasteners.

In the display device of the present invention, the flexible member is constituted preferably by a planar body made of aluminum having a thickness of at least 1 mm and at most 5 mm. According to such an embodiment of the present invention, the adhesion between the transparent substrate and the double-sided adhesive and the bonding strength between the flexible member and the attaching member can be secured from the following reasons.

That is, if the flexible member made of aluminum has a thickness of less than 1 mm, even when a female screw hole or the like is formed in the flexible member by tapping, its screw thread is insufficient, and enough bonding strength cannot be secured even when a bolt is screwed.

On the other hand, if the flexible member made of aluminum has a thickness exceeding 5 mm, e.g. warpage of the flexible member cannot be flattened by the force of a worker, and the adhesion between the transparent substrate and the double-sided adhesive cannot be secured. Accordingly, the thickness of the flexible member is preferably at least 1 mm and at most 5 mm, more preferably at least 2 mm and at most 3 mm.

In the display device of the present invention, a second transparent substrate is preferably provided between the transparent substrate and the liquid crystal panel. According to such an embodiment of the present invention, the back light is fixed to the second transparent substrate by means of the flexible member and the attaching member, and the load of the back light is applied to the transparent substrate via the flexible member and the attaching member. Accordingly, the load of the back light will not be applied to the bonding surface of the transparent substrate.

In the display device of the present invention, a touch panel is preferably provided between the transparent substrate and the liquid crystal panel or the second transparent substrate. According to such an embodiment of the present invention, the distance between the touch panel and the liquid crystal panel tends to be large, whereby noises generated in the liquid crystal panel or the back light are less likely to reach the touch panel, and misdetection of the touch panel can be prevented.

In the display device of the present invention, the thickness of a space between an installation surface of the flexible member to which the attaching member is attached and the transparent substrate is preferably larger than the thickness of the touch panel. According to such an embodiment of the present invention, by making the thickness between the installation surface of the flexible member and the transparent substrate larger than the thickness of the touch panel, when the attaching member is attached to the flexible member, it is possible to prevent the attaching member from interfering with the touch panel. Accordingly, it is possible to prevent the touch panel from being damaged by interference of the attaching member with the touch panel. Further, it is possible to prevent misdetection by interference of the attaching member with the touch panel.

In the display device of the present invention, the flexible member is preferably provided avoiding a signal leader line of the touch panel. According to such an embodiment of the present invention, by the flexible member being provided avoiding a signal leader line of the touch panel, the flexible member will not interfere with the signal leader line, and the degree of freedom of the handling efficiency of the signal leader line of the touch panel will improve.

The process for producing the display device of the present invention is a process for producing a display device comprising a transparent substrate and a liquid crystal display device having a liquid crystal panel and a back light, bonded to the transparent substrate, which comprises a step of bonding the liquid crystal panel to the transparent substrate by the transparent resin, a step of bonding the strip double-sided adhesive to the flexible member, a step of disposing the flexible member so as to surround the liquid crystal panel and bonding the flexible member to the transparent substrate while bending the flexible member by the pushing force of a worker, a step of attaching the attaching member to the flexible member, and a step of attaching the back light to the attaching member attached.

According to the present invention, by bonding the flexible member to the double-sided adhesive, the whole surface of the double-sided adhesive can be tightly attached to the transparent substrate, whereby the transparent substrate and the flexible member can be strongly fixed. And, by providing the attaching member to the flexible member and attaching the attaching member to the back light, the back light can be securely fixed to the transparent substrate.

Further, during application, the load of the back light is not applied to the transparent resin on the liquid crystal panel, and accordingly the bonding strength between the transparent substrate and the liquid crystal panel does not decrease.

In the process for producing the display device of the present invention, it is preferred that a second transparent substrate is bonded to the transparent substrate by the transparent resin, and then the liquid crystal panel is bonded to the second transparent substrate by the transparent resin. Otherwise, in the process for producing the display device of the present invention, it is preferred that in the step of bonding the liquid crystal panel to the transparent substrate by the transparent resin, a touch panel is bonded to the transparent substrate by the transparent resin, a second transparent substrate is bonded to the touch panel by the transparent resin, and then the liquid crystal panel is bonded to the second transparent substrate by the transparent resin.

According to these embodiments of the present invention, the transparent substrate, the touch panel, the second transparent substrate and the liquid crystal panel are bonded respectively via the transparent resin, whereby transparency of the respective bonding surfaces can be secured, and accordingly an image formed by the liquid crystal panel can be clearly viewed when observed from the surface of the transparent substrate on the opposite side from these bonding surfaces.

### BRIEF DESCRIPTION OF DRAWINGS

Fig. 1 is a schematic vertical cross-sectional view illustrating a display device according to a first embodiment of the present invention.
Fig. 2 is a schematic rear view illustrating the display device in the first embodiment as observed from a rear side.
Fig. 3 is a vertical cross-sectional view illustrating details of the back light attaching structure in the first embodiment.
Fig. 4 is a schematic oblique view illustrating the back light attaching structure in the first embodiment.
Fig. 5 is a flow chart illustrating the process for producing the display device in the first embodiment.
Fig. 6 is a schematic oblique view illustrating the structure of a display device-provided table according to a second embodiment of the present invention.
Fig. 7 is a schematic cross-sectional view illustrating the structure of the display device in the second embodiment.
Fig. 8 is a schematic bottom view illustrating the wiring structure of the display device in the second embodiment.
Fig. 9 is a schematic cross-sectional view illustrating the display device attaching structure in the second embodiment.
Fig. 10 is a flow chart illustrating the process for producing the display device in the second embodiment.
Fig. 11 is a schematic cross-sectional view illustrating the display device attaching structure according to a third embodiment of the present invention.

### DESCRIPTION OF EMBODIMENTS

Now, the present invention will be described with reference to drawings.

### [1] First embodiment

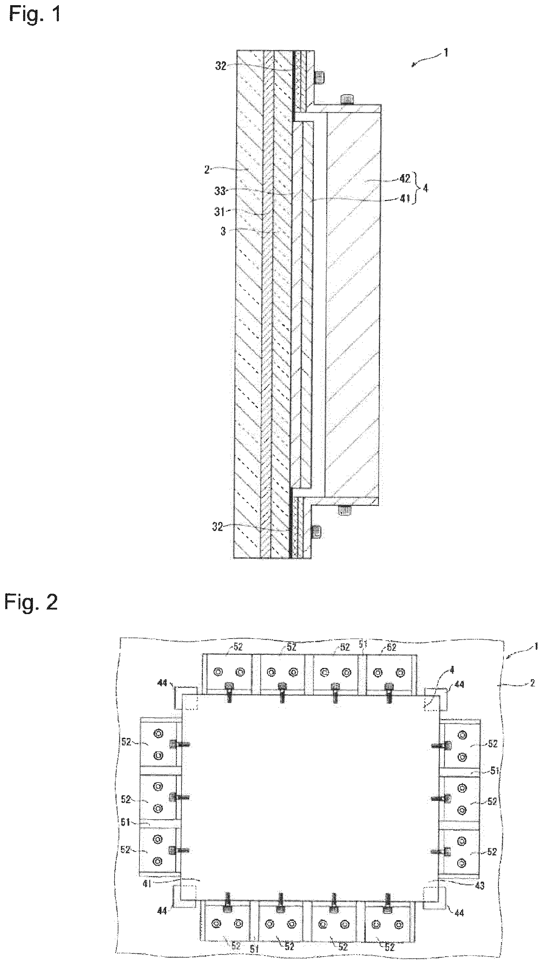

Fig. 1 illustrates a display device 1 according to a first embodiment of the present invention. The display device 1 is an information or advertisement medium which displays a liquid crystal display image on e.g. a window glass to conduct switching display of digital images or to display video images. The display device 1 comprises a transparent substrate 2 such as a window glass, an insert glass 3 bonded to the transparent substrate 2, and a liquid crystal display device 4 provided on the insert glass 3.

The transparent substrate 2 is constituted by a rectangular transparent plate body and may be constituted, for example, by inorganic glass such as soda lime glass, aluminosilicate glass or aluminoborosilicate glass, or organic glass constituted by e.g. a polycarbonate resin or an acrylic resin. The thickness of the transparent substrate 2 may be properly set depending upon the load estimated for the transparent substrate 2 and may, for example, be at least 0.5 mm and at most 5 mm. The transparent substrate 2 may have chemical tempering treatment or antireflection film-forming treatment applied as the case requires.

The insert glass 3 is bonded to an inner surface of the transparent substrate 2 via a transparent resin 31 so as to prevent reflection of a reflected image. In the first embodiment, the insert glass 3 is bonded, however, it is not necessarily required, and the transparent substrate 2 and the liquid crystal display device 4 may be directly bonded, or the transparent substrate 2 and the liquid crystal display device 4 may be disposed with a space between them. The insert glass 3 may be one made of the same material as the transparent substrate 2.

The transparent resin 31 which bonds the insert glass 3 to the transparent substrate 2 is formed by curing a liquid photocurable resin composition. The transparent resin 31 may be one preliminarily formed into a sheet having a predetermined thickness.

The thickness of the transparent resin 31 is preferably from about 0.1 mm to about 2.0 mm, more preferably from about 0.2 mm to about 0.8 mm. The photocurable resin composition is a liquid composition containing a curable composition having photocurability, a photopolymerization initiator and as the case requires, a non-curable oligomer. The non-curable oligomer is an oligomer having a hydroxy group which does not undergo curing reaction with the curable compound in the composition at the time of curing the photocurable resin composition.

The curable compound having photocurability may, for example, be a urethane acrylate oligomer, a silicone oligomer or an acrylic oligomer. Further, a thermosetting resin composition may be used instead of the photocurable resin composition. In such a case, a thermal polymerization initiator is contained instead of the photopolymerization initiator.

On the opposite side of the insert glass 3 from the transparent substrate 2-bonded surface, a light-shielding film 32 is formed on the periphery of the liquid crystal display device 4. The light-shielding film 32 is formed on the periphery of an image display region of the insert glass 3, and masks the after-described drive circuit such as a driver IC of a liquid crystal panel 41 and masks the after-described liquid crystal display device 4 attaching structure as well.

To an inside of the surface of the insert glass 3 on which the light-shielding film 32 is formed, a transparent resin 33 constituted by the same material as the transparent resin 31 is applied, and by this transparent resin 33, to the insert glass 3, a liquid crystal panel 41 is bonded.

The liquid crystal display device 4 comprises the liquid crystal panel 41 bonded to the insert glass 3 and a back light 42 provided on the rear side of the liquid crystal panel 41. The liquid crystal panel 41 is bonded to the rear side of the insert glass 3 via the above-described transparent resin 33.

Further, a liquid photocurable resin composition may be applied to the surface of the insert glass 3 and the photocurable resin composition is photo-cured, and then the liquid photocurable resin composition is applied to the rear side and then photo-cured, to prepare an insert glass 3 having the transparent resin 33 preliminarily applied on the front surface and the rear surface, which is bonded to the liquid crystal panel 41.

The liquid crystal panel 41 comprises a pair of glass substrates and a liquid crystal filled between the pair of glass substrates, although not shown. The pair of glass substrates comprises a TFT substrate provided with a thin film transistor and a color filter substrate provided with a color filter.

The back light 42 usually comprises a light-emitting device such as a light-emitting diode, a light guide plate, a prism sheet, a plurality of optical films such as light diffusion sheets, and a mirror. The light-emitting device, the light guide plate and the prism sheet are stored in a case 43, and the case 43 is fixed to the transparent substrate 2.

Fig. 2 illustrates a structure of the display device 1 as observed from a rear side which is the opposite side from the transparent substrate 2. The back light 42 is, as shown in Fig. 2, attached to the transparent substrate 2 by a flexible member 51 and L angles 52 as the attaching member.

Further, on each corner portion of the back light 42, a back light receiver 44 is attached to the transparent substrate 2 for positioning of the back light 42. The back light receiver 44 is a solid cuboid having one corner cut to be in parallel with the respective faces of the cuboid.

The flexible member 51 is constituted by a planar body formed by extrusion and preferably made of aluminum, and has flexibility so that it bends in the direction of front and rear surfaces of the planar body. The flexible member 51 is formed so that its length is slightly shorter than the lengthwise or crosswise direction of the liquid crystal display device 4. The liquid crystal display device 4 comprises an image input/output terminal and a power cable terminal, although they are not shown in fig. 2, and in the first embodiment, cables connected to such terminals are drawn from the corner portion of the liquid crystal display device 4.

Further, an LCD controller is provided on the rear side of the back light 42, which is not shown in drawings, and is connected to an image input terminal. In this embodiment, the cable is drawn at the corner portion, but the portion is not limited thereto, and a structure in which the flexible member 51 is not attached to a portion through which the cable is withdrawn may also be employed.

On the upper surface of the flexible member 51, a plurality of L angles 52 are attached. Each L angle 52 is constituted by a piece member having a predetermined width, and is formed by extruding aluminum and cut in a direction at a right angle to the extrusion direction, in the same manner as the flexible member 51.

In the first embodiment, the L angles 52 are attached on four portions along a longer edge of the liquid crystal display device 4 and on three portions along a shorter edge of the liquid crystal display device 4, but the disposition of the L angles is not limited thereto. An appropriate number of the L angles 52 may be provided in accordance with the size of the liquid crystal display device 4 and the weight of the back light 42 to be supported.

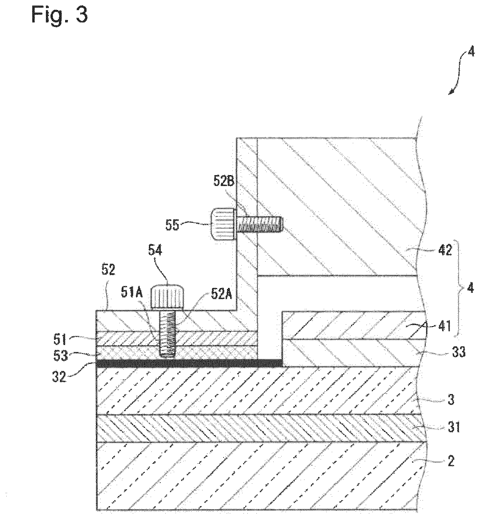

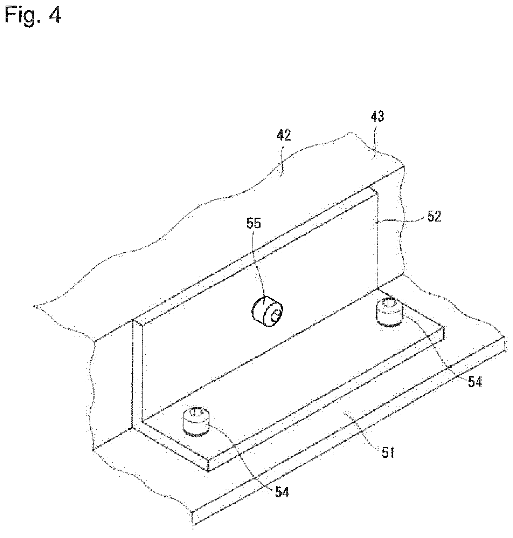

Fig. 3 illustrates a schematic cross-sectional view illustrating details of the back light 42 attaching portion, and Fig. 4 illustrates a schematic oblique view illustrating a part of the back light 42 attaching structure. The lower side of Fig. 3 corresponds to an image display surface of the liquid crystal display device 4.

On the rear side of the transparent substrate 2, a double-sided adhesive tape 53 as a double-sided adhesive is bonded so as to surround the liquid crystal display device 4. The double-sided adhesive tape 53 is constituted by a strip tape, and for example, may be one comprising a core material constituting by a foam such as an acrylic foam and an acrylic adhesive applied to front and rear surfaces of the core material. As the double-sided adhesive tape 53, for example, bonding tape VHB (trade name manufactured by 3M) for an acrylic foam structure may be employed.

By tightly attaching the flexible member 51 to the double-sided adhesive tape 53 and pressing them from an out-of-plane direction by a worker, the flexible member 51 bends in the out-of-plane direction and can be tightly attached to the whole surface of the transparent substrate 2.

Accordingly, the thickness of the flexible member 51 is preferably a thickness to maintain flexibility so that the flexible member 51 is bent by the pushing force of a worker. Specifically, the thickness of the flexible member 51 is preferably at least 1 mm and at most 5 mm, more preferably at least 2 mm and at most 3 mm.

If the thickness of the flexible member 51 exceeds 5 mm, the flexibility of the flexible member 51 will decrease, and the flexible member will not be bent by the pushing force of a worker, and the adhesion of the flexible member 51 to the transparent substrate 2 will decrease.

On the other hand, if the thickness of the flexible member 51 is less than 1 mm, the number of screw crests of a female screw hole 51A to screw the L angle 52 will be small, and the mechanical fixing strength between the flexible member 51 and the L angle 52 will decrease, the details of which will be described hereinafter.

In the first embodiment, the flexible member 51 which is planar is employed, however, so long as the flexible member 51 is flexible, its shape is not limited thereto. For example, the flexible member may be curved in an arch in the width direction and is disposed so that the concave curve faces the double-sided adhesive tape 53 side, or may be formed into a crest form in the width direction and is disposed so that the valley side opposite from the crest faces the double-sided adhesive tape 53 side.

Further, as mechanical properties of the flexible member 51, the Young's modulus (flexural modulus) is preferably from 10×10² MPa to 20×10⁴ MPa, more preferably from 1×10⁴ to 10×10⁴ MPa. Within the above range, the flexible member 51 can be bent by the pushing force of a worker, and also has a sufficient strength to fix the L angles 52. The Young's modulus of a metal may be a value measured in accordance with JIS Z2280:1993 and the flexural modulus of a plastic may be a value measured in accordance with JIS K7171:2016.

Further, in the first embodiment, the flexible member 51 is made of aluminum, but is not limited thereto. For example, as the flexible member, a planar body made of another metal such as stainless steel or iron, or a rectangular substrate made of a synthetic resin such as polyethylene terephthalate, polycarbonate, polyethylene, polypropylene or polyvinyl chloride may be employed. Further, a rectangular substrate comprising a core material such as an acrylic foam and having an adhesive applied to one side of the core material, like the double-sided adhesive tape 53, may be employed.

On the opposite side of the double-sided adhesive tape 53 from the transparent substrate 2-bonded surface, the flexible member 51 is face-to-face bonded. As shown from Figs. 3 and 4, the flexible member 51 has a plurality of female screw holes 51A formed at predetermined intervals.

The female screw hole 51A may be formed, for example, in the case of a metric screw thread in accordance with JIS B0205, as a M3 or M4 hole, penetrating through the flexible member 51. Into the female screw hole 51A, a bolt 54 to attach the L angle 52 to the flexible member 51 is screwed.

In the case of M3 metric screw thread, the female screw hole 51A has a pitch of 0.5 mm, and considering the bonding strength, when the bolt 54 is screwed, three or four crests are preferably secured for screwing the bolt 54, and accordingly the thickness of the flexible member 51 is preferably from 1.5 mm to 2 mm. The female screw hole 51A is not limited to the screw in accordance with the above JIS standard, and may be a screw in accordance with ISO standard or other standard.

On the rear side of the flexible member 51, one side of the mountain of the L angle 52 is provided so as to be in contact with the flexible member 51.

The L angle 52 has, as shown in Figs. 3 and 4, two holes 52A formed in the width direction, and a bolt 54 is inserted into each hole 52A. The bolt 54 is screwed into the female screw hole 51A in the flexible member 51, and the L angle 52 is mechanically fixed to the flexible member 51.

The tip of the bolt 54 may protrude from the flexible member 51-bonded surface at the time of screwing, however, if it protrudes, preferably it does not peel the double-sided adhesive tape 53-bonded surface.

The other side of the mountain of the L angle 52 stands in the out-of-plane direction of the flexible member 51. Substantially at the center portion of the standing side of the mountain of the L angle 52, a hole 52B is formed, through which a bolt 55 is inserted. The tip of the bolt 55 is screwed into a female screw hole (not shown) formed in the case 43 of the back light 42, so that the back light 42 is attached to the L angle 52.

In the first embodiment, the L angle 52 has an L-shaped cross section is employed, but the attaching member is not limited thereto. For example, the attaching member may be a piece member having a C-shaped cross section, may be a piece member having a rectangular cross section, or may have a piece member having a triangular cross section. In a case where the attaching member has a rectangular or triangular cross section, it has a cross section closer to a hollow section as compared with the L angle 52 having an L-shaped cross section, and the mechanical strength of the attaching member itself will improve.

Further, in the first embodiment, the holes 52A and 52B formed in the L angle 52 are a simple circular hole, but may be a long hole extending in the width direction of the L angle 52. When the holes 52A and 52B are formed as a long hole, positioning of the female screw hole 51A formed in the flexible member 51 or the female screw hole formed in the case 43 of the back light 42 will be easy, and attaching workability of the L angle 52 to the flexible member 51 and the attaching workability of the back light 42 to the L angle 52 will improve.

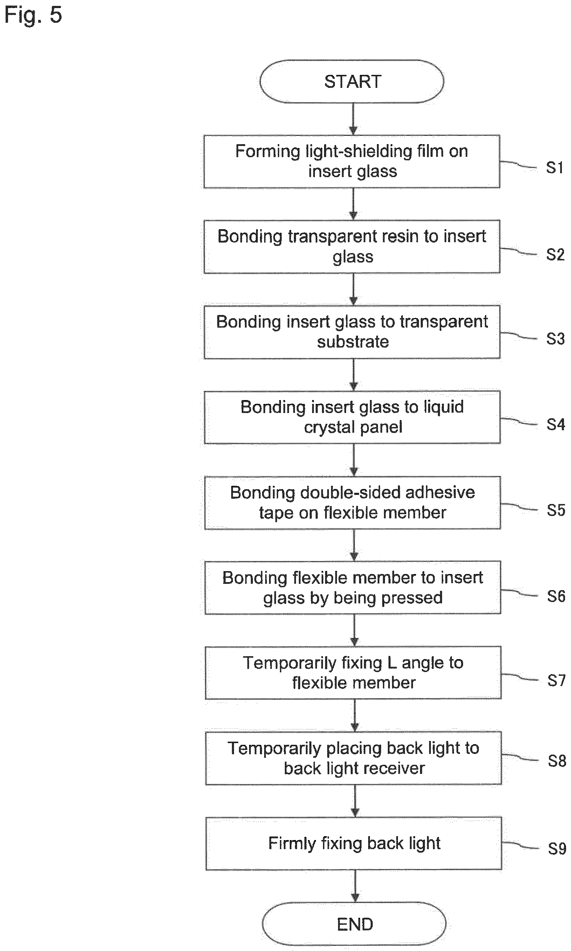

Now, the process for producing the display device 1 according to the first embodiment will be described with reference to the flow chart shown in Fig. 5. In the following, the process will be described as a procedure to apply a liquid crystal display device 4 as digital signage in the inside of the transparent substrate 2 such as a window glass.

First, a light-shielding film 32 is formed on the periphery of an insert glass 3 (step S1). Formation of the light-shielding film 32 may be carried out by e.g. spraying, application or deposition of a light-shielding material.

Then, on the opposite side of the insert glass 3 from the surface on which the light-shielding film 32 is formed, a sheet-shaped transparent resin 31 is bonded. Further, on a region on which the light-shielding film 32 is not formed on the insert glass 3, a sheet-shaped transparent resin 33 is bonded (step S2).

A transparent substrate 2 is tightly attached to the transparent resin 31 and the transparent substrate 2 is bonded to the insert glass 3 (step S3).

A liquid crystal panel 41 is tightly attached to the transparent resin 33 and the liquid crystal panel 41 is bonded (step S4).

A release paper of a double-sided adhesive tape 53 is peeled, and the double-sided adhesive tape 53 is bonded to a flexible member 51 (step S5), and a release paper on the opposite side of the double-sided adhesive tape 53 is removed.

The flexible member 51 is disposed so as to surround the periphery of the liquid crystal panel 41 while being pressed from the out-of-plane direction and the flexible member 51 is bonded to the insert glass 3 (step S6).

L angles 52 are temporarily fixed to the flexible member 51 (step S7). The temporarily fixation is carried out in such a state that a bolt 54 is inserted into a hole 52A of the L angle 52 and the bolt 54 is lightly screwed into a female screw hole 51A in the flexible member 51.

Back light receivers 44 are preliminarily fixed at positions on the transparent substrate 2 corresponding to corner portions of the liquid crystal panel 41, and a back light 42 is temporarily placed on the back light receivers 44 (step S8). By preliminarily fixing the back light receivers 44, a worker can fix the back light 42 with a less force since it is not necessary to support the entire weight of the back light 42.

After the back light 42 is temporarily placed, positioning of the L angles 52 temporarily fixed on the flexible member 51 is conducted, and a bolt 55 is screwed into the back light 42 also to tightly fix the back light 42 on the L angles 52 (step S9).

According to such a first embodiment, by the flexible member 51, the flexible member 51 is bent by the pushing force of a worker so that the whole surface of the double-sided adhesive tape 53 can be tightly attached to the transparent substrate 2. Further, by attaching the L angles 52 to the tightly attached flexible member 51 and attaching the back light 42 to the L angles 52, the back light 42 can be fixed securely on the transparent substrate 2.

Since the transparent substrate 2 which is planar and the flexible member 51 can be bonded by the double-sided adhesive tape 53, substantially the whole surface of the flexible member 51 can be tightly attached to the transparent substrate 2 with less force by a worker.

Since the flexible member 51 and the L angle 52 are mechanically fixed by fastening by screws, the flexible member 51 and the L angle 52 can be strongly fixed, and the back light 42 can be fixed with a smaller number of the L angles 52.

By making the thickness of the flexible member 51 preferably at least 2 mm and at most 3 mm, in the case of a metric screw thread, three to four crests of a screw thread may be formed in the female screw hole 51A in the thickness direction. Accordingly, the number of crests for screwing the bolt 54 can be sufficiently secured, and the bonding strength between the flexible member 51 and the L angle 52 can be sufficiently secured.

By bonding the double-sided adhesive tape 53 to the flexible member 51, the whole surface of the double-sided adhesive tape 53 can be tightly attached to the transparent substrate 2, whereby the transparent substrate 2 and the double-sided adhesive tape 53 can be strongly fixed.

And, by providing the L angle 52 on the flexible member 51 and attaching the back light 42 to the L angles 52, the back light 42 can be securely fixed to the transparent substrate 2.

Further, during application, the load of the back light 42 will not be applied to the transparent resin 33 on the liquid crystal panel 41, the bonding strength between the transparent substrate 2 and the liquid crystal panel 41 will not decrease.

### [2] Second embodiment

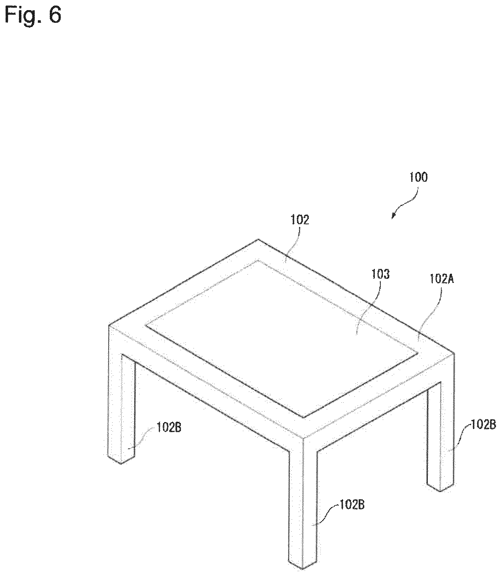

Fig. 6 illustrates a liquid crystal display device-provided table 100 according to a second embodiment of the present invention. The liquid crystal display device-provided table 100 is to be used for a conference, presentation, etc. by displaying various images on a display screen of a liquid crystal display device 103, and comprises a table main body 102 and the after-described touch panel type liquid crystal display device 103.

The table main body 102 is constituted by a metal frame comprising a rectangular top plate 102A and four legs 102B extending vertically downward from four corners of the top plate 102A, and a center portion of the top plate 102A of the table main body 102 is open.

The liquid crystal display device 103 is attached to the opening of the top plate 102A of the table main body 102. The liquid crystal display device 103 is connected to a computer (not shown), and the results by operation of the computer are displayed on the liquid crystal display device 103.

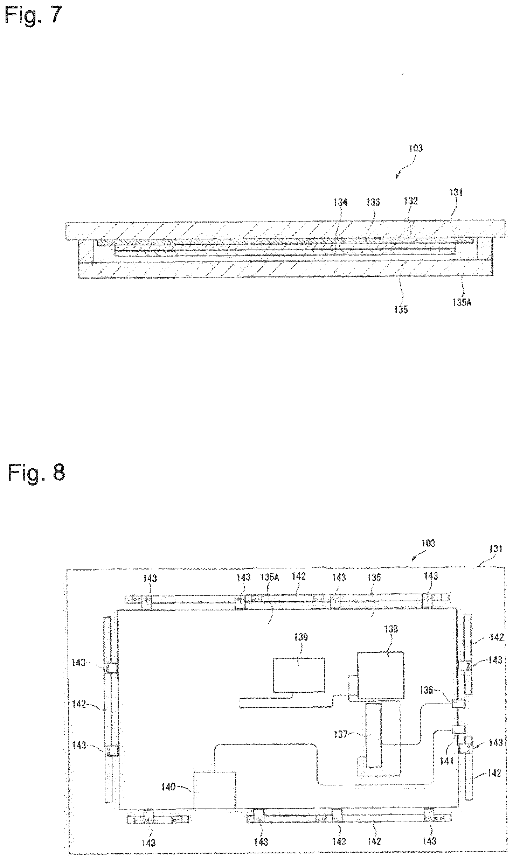

The liquid crystal display device 103 comprises, as shown in Fig. 7, a cover glass 131 as a transparent substrate, a touch panel 132, an insert glass 133 as a second transparent substrate, a liquid crystal panel 134 and a back light 135 laminated in this order.

The cover glass 131 is constituted by a rectangular transparent plate body, and may be constituted, for example, by inorganic glass such as soda lime glass, aluminosilicate glass or aluminoborosilicate glass, or organic glass such as a polycarbonate resin or an acrylic resin. The thickness of the cover glass 131 may be properly set depending upon the load estimated for the cover glass 131 and may, for example, be at least 0.5 mm and at most 5 mm. The cover glass 131 may have chemical tempering treatment or antireflection film-forming treatment applied as the case requires.

The display region in the cover glass 131 is a center portion of the cover glass 131, and on the periphery of the display region, a light-shielding portion is formed (not shown), and the light-shielding portion masks wirings of the touch panel 132 and the liquid crystal panel 134. The light-shielding portion is preferably formed on the lower surface side of the cover glass 131, whereby peeling of the light-shielding portion when the touch panel is used can be prevented. The light-shielding portion may be formed in the same manner as the above-described light-shielding film 32.

The touch panel 132 is bonded on the lower surface (the side on which the light-shielding portion is provided) of the cover glass 131 via a transparent resin. The touch panel 132 is constituted by a transparent electrode membrane, in which a uniform low voltage electric field is generated in the entire touch panel 132 by applying a voltage to electrodes at four corners of the cover glass 131, and a change in the electrostatic capacity when the surface is touched with a finger or a touch pen is measured at the four corners of the touch panel 132 to specify the coordinates of the finger.

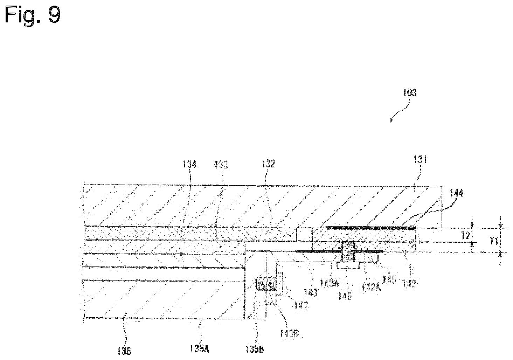

The detected coordinates are output on the computer via a signal leader line and processed by the computer. The planar shape of the touch panel 132 is larger than the planar shape of the liquid crystal panel 134 as describer hereinafter (Fig. 9). A portion of the touch panel 132 protruding from the liquid crystal panel 134, a plurality of signal leader lines are drawn.

The transparent resin to bond the touch panel 132 to the cover glass 131 is formed by curing a liquid photocurable resin composition. The thickness of the transparent resin is preferably from about 0.1 mm to about 2.0 mm, more preferably from about 0.2 mm to about 0.8 mm. The photocurable resin composition is a liquid composition containing a curable composition having photocurability, a photopolymerization initiator and as the case requires, a non-curable oligomer. The non-curable oligomer is an oligomer having a hydroxy group which does not undergo curing reaction with the curable compound in the composition at the time of curing the photocurable resin composition. The curable compound having photocurability may, for example, be a urethane acrylate oligomer, a silicone oligomer or an acrylic oligomer. Further, a thermosetting resin composition may be used instead of the photocurable resin composition. In such a case, a thermal polymerization initiator is contained instead of the photopolymerization initiator.

The transparent resin may be one preliminarily formed into a sheet having a predetermined thickness.

The insert glass 133 is bonded on the lower surface of the touch panel 132 via a transparent resin. The insert glass 133 is constituted by the same material as the cover glass 131, and is bonded to the touch panel 132 by the same transparent resin as the above-described transparent resin.

By the insert glass 133 provided between the touch panel 132, and the liquid crystal panel 134 and the back light 135 in such a manner, the distance between the touch panel 132 and the liquid crystal panel 134 tends to be large. Accordingly, noises generated in the liquid crystal panel 134 and the back light 135 are less likely to reach the touch panel 132, and misdetection of the touch panel 132 can be prevented.

The liquid crystal panel 134 is bonded to the lower surface of the insert glass 133 via the above-described transparent resin.

Further, the above-described liquid photocurable resin composition may be applied to the upper surface of the insert glass 133 and the photocurable resin composition is photo-cured, and then the liquid photocurable resin composition is applied to the lower surface and then photo-cured, to prepare an insert glass 133 having the transparent resin preliminarily applied on the upper surface and the lower surface, and the touch panel 132 and the liquid crystal panel 134 are bonded.

The liquid crystal panel 134 comprises a pair of glass substrates and a liquid crystal filled between the pair of glass substrates. The pair of glass substrates comprises a TFT substrate provided with a thin film transistor and a color filter substrate provided with a color filter.

The back light 135 usually comprises a light-emitting device such as a light-emitting diode, a light guide plate, a prism sheet, a plurality of optical films such as light diffusion sheets, and a mirror. The light-emitting device, the light guide plate and the prism sheet are stored in a case 135A, and the case 135A is fixed to the cover glass 131.

Fig. 8 illustrates a schematic view illustrating the liquid crystal display device 103 as observed from the bottom side. The liquid crystal display device 103 comprises various wirings and input/output terminals provided on the lower surface of the case 135A of the back light 135. Specifically, the liquid crystal display device 103 comprises an image input terminal 136, a signal branch circuit 137, an LCD controller 138, an LCD drive circuit 139, a touch panel controller 140 and a signal output terminal 141.

To the image input terminal 136, a cable to be connected to a computer is connected, and image signals output from the computer are input. As the image input terminal 136, for example, an analogue image terminal such as a D connector or a VGA connector, or a digital image terminal such as a DVI-D connector or a HDMI connector (trade name manufactured by HDMI Licensing Administrator, Inc.) may be employed.

The signal branch circuit 137 outputs image signals from the computer input from the image input terminal 36 to the LCD controller 138 and a back light drive circuit (not shown). The back light drive circuit controls a light-emitting device of the back light 135 based on luminance signals contained in image signals.

The LCD controller 138 conducts image-processing to display image signals of the computer input from the image input terminal 136 on the liquid crystal panel 134 as an image and outputs the signals to the LCD drive circuit 139 as image signals.

The LCD drive circuit 139 forms drive signals to drive pixels constituting the liquid crystal panel 134 based on image signals output from the LCD controller 138 and outputs the signals to the liquid crystal panel 134.

To the touch panel controller 140, a plurality of FPC (flexible print cable) electrically connected to signal leader lines of the touch panel 132 are connected. The touch panel controller 140 converts coordinates detected by the touch panel 132 from analog signals to digital signals and outputs the signals to the signal output terminal 141.

The signal output terminal 141 outputs the digital signals indicating the coordinates positions on the display screen converted by the touch panel controller 40 to the computer via a cable. As the signal output terminal 141, e.g. a terminal by USB specification or a terminal by IEEE1394 specification may properly be employed.

Around the back light 135, more specifically, on the outer periphery of the touch panel 132, along each edge of the rectangular back light 135, a flexible member 142 is provided. The flexible member 142 is constituted by a strip plate body made of a metal such as aluminum and is bent in the out-of-plane direction by being pressed from the out-of-plane direction by a worker, in the same manner as the flexible member 51 in the first embodiment. The flexible member 142 is attached to the lower surface of the cover glass 131.

The flexible member 142 extends along each edge of the rectangular back light 135, provided that it avoids a position of the touch panel controller 140 to which the wiring of the touch panel 132 is connected, and positions at which the image input terminal 136 and the signal output terminal 141 are provided, considering handling of the wiring of the touch panel 132 and cables connected to the computer.

On the lower surface of the flexible member 142, a plurality of attaching members 143 are provided. The attaching member 143 is constituted by a piece-shaped metal member and intermittently provided along the extending direction of the flexible member 142.

Fig. 9 illustrates a schematic cross-sectional view illustrating the attaching structure of the liquid crystal display device 103 by the flexible member 142 and the attaching member 143. The flexible member 142 is constituted by a metal strip member having a solid rectangular cross-sectional shape.

The flexible member 142 is disposed so as to surround the outer periphery of the touch panel 132.

On the lower surface of the flexible member 142, a plurality of female screw holes 142A are formed along the extending direction. On the upper surface of the flexible member 142, a strip double-sided adhesive tape 144 is bonded so that the flexible member 142 is bonded to the lower surface of the cover glass 131. As the double-sided adhesive tape 144, for example, a bonding tape VHB (trade name manufactured by 3M) for an acrylic foam structure using an acrylic adhesive may be employed.

The attaching member 143 is constituted by a metal piece-shaped member having an L-shaped cross section, one edge of the L-shape is in contact with the attaching surface to be the lower surface of the flexible member 142 via a double-sided adhesive tape 145, and the other side of the L-shape is in contact with the side surface of the case 135A to be the outer surface of the back light 135.

On the attaching member 143, two holes 143A are formed in the width direction corresponding to the direction at right angles to the paper surface. A screw 146 is inserted into the hole 143A and screwed into the female screw hole 142A formed in the flexible member 142, and the attaching member 143 is fixed to the flexible member 142.

The thickness T1 between an installation surface of the flexible member 142 to which the attaching member 143 is attached and the lower surface of the cover glass 131, is larger than the thickness T2 of the touch panel 132.

Thus, it is possible to prevent the attaching member 143 from interfering with the protruding portion of the touch panel 132 when the attaching member 143 is attached to the flexible member 142. Accordingly, it is possible to prevent misdetection by interference of the attaching member 143 with the touch panel 132.

To the other side surface of the L-shape of the attaching member 143, a hole 143B is formed. Into the hole 143B, a screw 147 is inserted.

The inserted screw 147 is screwed into a female screw hole 135B formed on the side surface of the case 135A of the back light 135 and supports and fixed the back light 135.

It is preferred that at least one of the hole 143A and the hole 143B is a long hole. When at least one of the hole 143A and the hole 143B is a long hole, at the time of attaching the back light 135 to the cover glass 131, relative positioning of the back light 135 and the liquid crystal panel 134 tends to be easy. For example, when the hole 143B is a long hole extending in a direction between the back light 135 and the liquid crystal panel 134, positioning can be conducted by attaching the back light 135 as follows.

First, the attaching member 143 is attached to the case 135A of the back light 135 by inserting the screw 147 into the hole 143B and screwing it into the female screw hole 135B. On that occasion, the attaching member 143 is attached loosely so that it is slidable up and down on the side surface of the back light 135.

Positioning of the back light 135 and the liquid crystal panel 134 is carried out. Positioning is carried out so that the liquid crystal panel 134 is uniformly lightened by the back light 135.

Then, the attaching member 143 is let slide, and in a state where the attaching member 143 is in contact with the flexible member 142, the screw 146 is inserted into the hole 143A and screwed into the female screw hole 142A, to fix the attaching member 143 to the flexible member 142.

Finally, the screw 147 is screwed tightly to firmly fix the back light 135.

Further, in a case where the hole 143A of the attaching member 143 is a long hole extending in the extending direction of the flexible member 142, planar relative positioning of the liquid crystal panel 134 and the back light 135 will be possible.

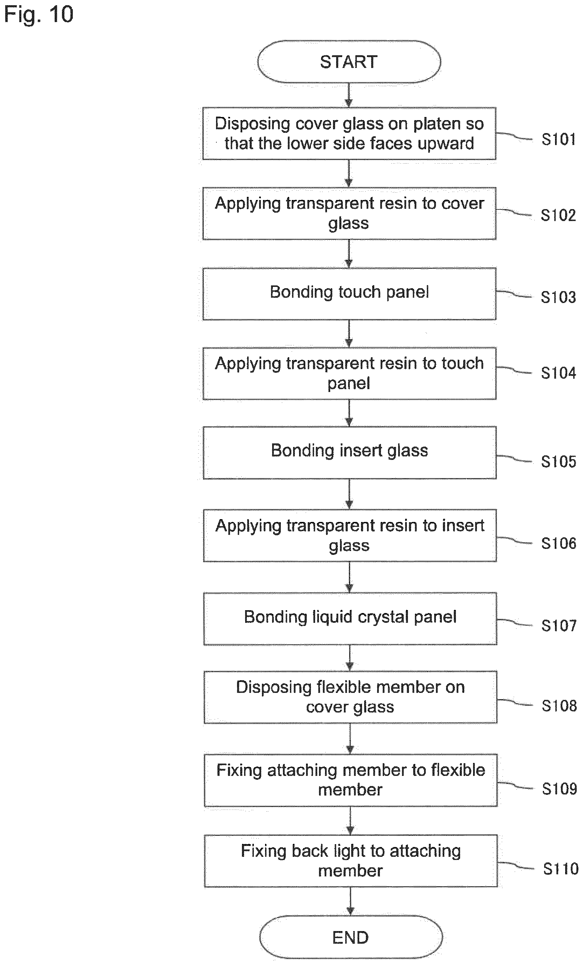

Now, the process for producing the liquid crystal display device 103 according to the second embodiment will be described with reference to the flow chart shown in Fig. 10.

Disposing the cover glass 131 on a platen so that the lower surface (side on which the light-shielding portion is formed) faces upward (step S101).

Applying or bonding a transparent resin to the lower surface (side facing upward) of the cover glass 131 (step S102).

Bonding the touch panel 132 to the cover glass 131 (step S103).

Applying or bonding a transparent resin to the lower surface (side facing upward) of the touch panel 132 (step S104).

Bonding the insert glass 133 to the touch panel 132 (step S105).

Applying of bonding a transparent resin to the lower surface (side facing upward) of the insert glass 133 (step S106).

Bonding the liquid crystal panel 134 to the insert glass 133 (step S107).

Disposing the flexible member 142 so as to surround the touch panel 132 and bonding it to the lower surface (side facing upward) of the cover glass 131 by using the double-sided adhesive tape 144 (step S108).

Fixing the attaching member 143 on the installation surface of the flexible member 142 by the double-sided adhesive tape 145 and the screw 146 (step S109).

Inserting the screw 147 into the attaching member 143 and screwing the screw 147 into the female screw hole 135B formed on the side surface of the case 135A of the back light 135 to fix the back light 135 (step S110).

The order of the step S109 and the step S110 may be exchanged.

In the process for producing the liquid crystal display device 103 comprising such steps, the touch panel 132, the insert glass 133 and the liquid crystal panel 134 are laminated in this order, the flexible member 142 is provided on the cover glass 131, the attaching member 143 is attached to the flexible member 142 to attach the back light 135. Accordingly, during production of the liquid crystal display device 103, the load of the back light 135 will not be applied to the bonding surface between the cover glass 131 and the touch panel 132.

According to such a second embodiment, the back light 135 is fixed to the cover glass 131 by the flexible member 142 and the attaching member 143, whereby the load of the back light 135 is applied to the cover glass 131 via the flexible member 142 and the attaching member 143. Accordingly, the load of the back light 135 will not be applied to the bonding surface between the cover glass 131 and the touch panel 132, whereby peeling between the cover glass 131 and the touch panel 132 is less likely to occur.

### [3] Third embodiment

Now, the third embodiment of the present invention will be described. In the following, the same components, etc. as the above described components will be represented by the same symbols and their descriptions will be omitted.

In the above-described second embodiment, the attaching member 143 is in contact with the side surface of the case 135A of the back light 135, and fixing of the back light 135 is conducted by the screw 147 inserted to the hole 143B formed on the attaching member 143.

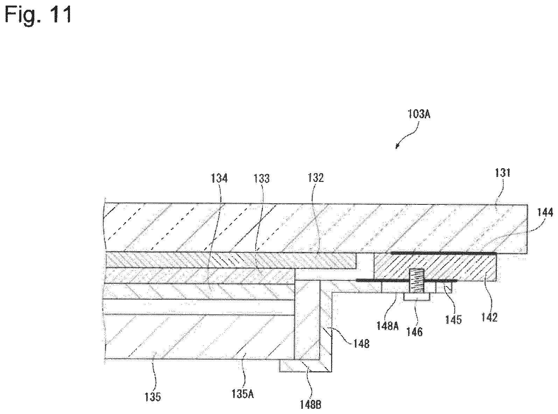

Whereas a liquid crystal display device 103A according to the third embodiment differs in that it has an attaching member 148 and the attaching member 148 supports the lower surface of the case 135A to be the outer surface of the back light 135, as shown in Fig. 11.

The attaching member 148 comprises a metal piece-shaped member having a Z-shaped cross section. On the surface in contact with the flexible member 142, a long hole 148A is formed. Further, the tip of a surface in contact with the case 135A of the back light 135 is bent about 90 degrees to form a support piece 148B. The support piece 148B supports the bottom of the case 135A of the back light 135.

The length of the long hole 148A is longer than the protruded length of the support piece 148B. Specifically, the length of the long hole 148A is set so that the tip of the support piece 148B will not interfere with the case 135A of the back light 135 in a state where the attaching member 148 is let slide farthest from the back light 135, and the support piece 148B can securely support the bottom of the case 135A of the back light 135 in a state where the attaching member 148 is let slide most closely to the back light 35.

To attach the back light 135, first, the attaching member 148 is attached to the flexible member 142 by the screw 146, in a state where the screw 146 is in contact with the long hole 138A at the innermost part. On that occasion, the attaching member 148 is attached loosely so that it is slidable on the attaching surface of the flexible member 142.

The back light 135 is inserted in a state where the tip of the support piece 148B is on the outermost side, and then the attaching member 148 is let slide inside, and the screw 146 is screwed tight to firmly fix the back light 135.

Also by the third embodiment described above, the same action and function as the second embodiment can be achieved.

Further, by the attaching member 148 having the long hole 148A, at the time of attaching the attaching member 148 to the flexible member 142, the back light 135 can be inserted in a state where the support piece 148B is disposed on the outermost side. After the back light 135 is inserted, the attaching member 148 is let slide inside, and the bottom of the case 135A of the back light 135 is supported by the support piece 148B to firmly fix the back light 135. Accordingly, it is not necessary to form e.g. a screw hole on the case 135A of the back light 135, and positions fixed by a screw can be reduced, and thus the process for producing the liquid crystal display device 103A can be simplified.

### [4] Modification of the respective embodiments

The present invention is not limited to the above first to third embodiments and includes the following modifications.

In the second embodiment, the present invention is applied to the liquid crystal display device-provided table 101, but the present invention is not limited thereto. For example, the present invention may be applied to a display device for digital signage to be provided to e.g. a vertically aligned window glass.

In the second embodiment, attaching of the attaching member 143 to the flexible member 142 is carried out by the double-sided adhesive tape 145 and the screw 146, but the present invention is not limited thereto. For example, the attaching member 143 may be fixed to the flexible member 142 only by the screw 146 without using the double-sided adhesive tape 145, or the attaching member 143 may be fixed to the flexible member 142 by a mechanical fixation method other than the screw 146. However, to support the load of the back light 135, it is essential to employ a mechanical fixation method to fix the flexible member 142 and the attaching member 143.

Further, in the second embodiment, the flexible member 142 is constituted by a metal stipe member, but the present invention is not limited thereto, and a plurality of piece-shaped members as the flexible member may be provided on the lower surface of the cover glass 131.

In addition, specific structures, shapes, etc. of the present invention may be changed or modified within a range where the object of the present invention can be achieved.

The entire disclosures of Japanese Patent Application No. 2017-196033 and Japanese Patent Application No. 2017-196034 filed on October 6, 2017 including specifications, claims, drawings and summaries are incorporated herein by reference in their entireties.

### REFERENCE SYMBOLS

1: display device, 2: transparent substrate, 2A: top plate, 2B: leg, 3: insert glass, 4: liquid crystal display device, 31: transparent resin, 32: light-shielding film, 33: transparent resin, 35: back light, 36: image input terminal, 40: touch panel controller, 41: liquid crystal panel, 42: back light, 43: case, 44: back light receiver, 51: flexible member, 51A: female screw hole, 52: L angle, 52A: hole, 52B: hole, 53: double-sided adhesive tape, 54: bolt, 55: bolt, 100: liquid crystal display device-provided table, 101: liquid crystal display device-provided table, 102: table main body, 102A: top plate, 103: liquid crystal display device, 103A: liquid crystal display, 131: cover glass, 132: touch panel, 133: insert glass, 134: liquid crystal panel, 135: back light, 135A: case, 135B: female screw hole, 136: image input terminal, 137: signal branch circuit, 138:LCD controller, 139: LCD drive circuit, 140: touch panel controller, 141: signal output terminal, 142: flexible member, 142A: female screw hole, 143: attaching member, 143A: hole, 143B: hole, 144: double-sided adhesive tape, 145: double-sided adhesive tape, 146: screw, 147: screw, 148: attaching member, 148A: long hole, 148B: support piece, T1: thickness, T2: thickness.

## Claims

1. A display device comprising a transparent substrate and a liquid crystal display device having a liquid crystal panel and a back light, disposed on the transparent substrate, which comprises:
a transparent resin to bond the liquid crystal panel to the transparent substrate,
a strip double-sided adhesive provided so as to surround the bonded liquid crystal panel and bonded on the transparent substrate,
a flexible member bonded to an opposite side of the double-sided adhesive from the transparent substrate-bonded surface, and
an attaching member to attach the back light, provided on an opposite side of the flexible member from the bonded surface.

2. The display device according to Claim 1, wherein the flexible member has flexibility such that the whole surface of the double-sided adhesive is tightly attached to the transparent substrate.

3. The display device according to Claim 1 or 2, wherein the flexible member is constituted by a planar body made of a metal or a synthetic resin.

4. The display device according to Claim 3, wherein the flexible member and the attaching member are mechanically fixed.

5. The display device according to Claim 3 or 4, wherein the flexible member is constituted by a planar body made of aluminum having a thickness of at least 1 mm and at most 5 mm.

6. The display device according to Claim 5, wherein the flexible member has a Young's modulus of from 10×10² MPa to 20×10⁴ MPa as measured in accordance with JIS Z2280:1993.

7. The display device according to any one of Claims 1 to 6, wherein a second transparent substrate is provided between the transparent substrate and the liquid crystal panel.

8. The display device according to any one of Claims 1 to 7, wherein a touch panel is provided between the transparent substrate and the liquid crystal panel or the second transparent substrate.

9. The display device according to Claim 7 or 8, wherein the thickness of a space between an installation surface of the flexible member to which the attaching member is attached, and the transparent substrate, is larger than the thickness of the touch panel.

10. The display device according to any one of Claims 7 to 9, wherein the flexible member is provided avoiding a signal leader line of the touch panel.

11. A process for producing the display device as defined in any one of Claims 1 to 10, comprising the following steps:
a step of bonding the liquid crystal panel to the transparent substrate by the transparent resin,
a step of bonding the strip double-sided adhesive to the flexible member,
a step of disposing the flexible member so as to surround the liquid crystal panel and bonding the flexible member to the transparent substrate,
a step of attaching the attaching member to the flexible member, and
a step of attaching the back light to the attaching member attached.

12. The process for producing the display device according to Claim 11, wherein in the step of bonding the liquid crystal panel to the transparent substrate by the transparent resin, a second transparent substrate is bonded to the transparent substrate by the transparent resin, and then the liquid crystal panel is bonded to the second transparent substrate by the transparent resin.

13. The process for producing the display device according to Claim 11, wherein in the step of bonding the liquid crystal panel to the transparent substrate by the transparent resin, a touch panel is bonded to the transparent substrate by the transparent resin, a second transparent substrate is bonded to the touch panel by the transparent resin, and then the liquid crystal panel is bonded to the second transparent substrate by the transparent resin.
